# EUROPEAN PATENT APPLICATION

(11) **EP 3 226 099 A1**
(43) Date of publication of application: **04.10.2017**
(21) Application number: 15862339.7
(22) Date of filing: 13.11.2015
(51) Int. Cl.: G05G 5/03

(54) **ROTATIONAL OPERATION DEVICE**

(30) Priority: 27.11.2014 JP 2014240288
(71) Applicant: Kabushiki Kaisha Tokai-Rika-Denki-Seisakusho, Niwa-gun, Aichi 480-0195 (JP); TOYOTA JIDOSHA KABUSHIKI KAISHA, Toyota-shi, Aichi-ken 471-8571 (JP)
(72) Inventor: URUSHIBATA, Takanori, Niwa-gun Aichi 480-0195 (JP)
(74) Representative: TBK
(86) International application number: PCT/JP2015/081977
(87) International publication number: WO 2016/084626

(57) **Abstract**

A rotational operation device includes a rotation shaft that rotates when an operation member is operated, a holder fixed to the rotation shaft, a helical torsion spring (42) fitted onto the rotation shaft and tightened when pushed by the holder in a rotation direction of the rotation shaft, and two collars (41) fitted into the helical torsion spring. Each of the collars (41) includes a taper with a first end surface having a first outer diameter that is less than a tightened state inner diameter of the helical torsion spring (42) and a second end surface having a second outer diameter that is greater than an initial inner diameter of the helical torsion spring. The two collars (41) are arranged with the first end surface of one of the collars opposing the first end surface of the other one of the collars and with the two collars (41) biased toward each other.

## Description

### TECHNICAL FIELD

The present invention relates to a rotational operation device that produces operational reaction force with a helical torsion spring.

### BACKGROUND ART

Patent document 1 discloses a rotational operation device including a steering shaft that rotates when a steering wheel is operated, a holder fixed to the steering shaft, and a helical torsion spring fitted onto the steering shaft. The helical torsion spring is tightened when pushed by the holder in a rotation direction of the steering shaft. In this structure, the rotation of the steering shaft tightens the helical torsion spring and produces operational reaction force. This allows a user to perceive the operational reaction force.

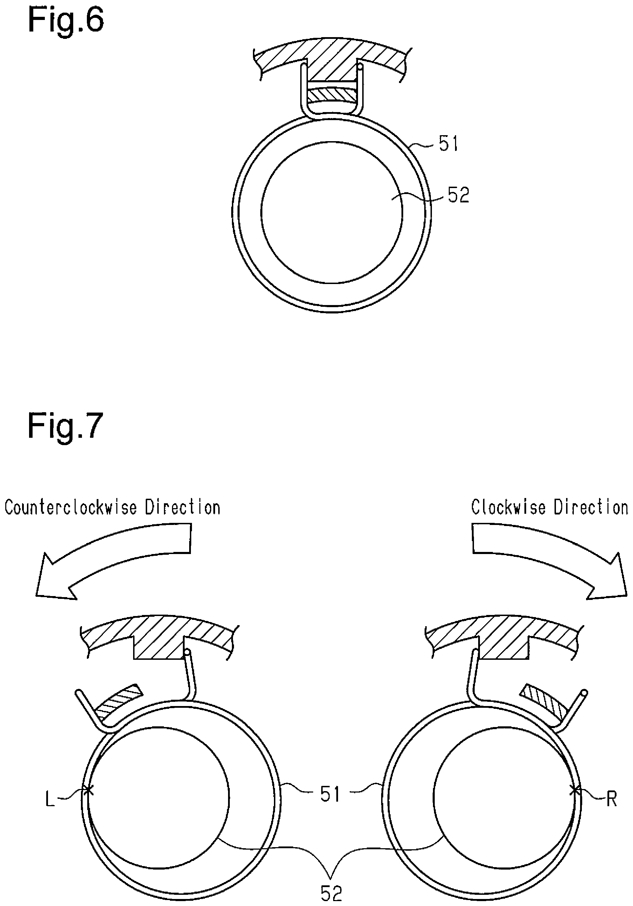

Fig. 6 shows the structure of a conventional rotational operation device. As shown in Fig. 6, a guide rod 52 is fitted into a helical torsion spring 51. The outer diameter of the guide rod 52 is less than the tightened state inner diameter of the helical torsion spring 51. This forms a suitable gap between the helical torsion spring 51 and the guide rod 52. Thus, the guide rod 52 serves as a core and allows for stable tightening of the helical torsion spring 51.

### PRIOR ART DOCUMENT

### PATENT DOCUMENT

Patent Document 1: Japanese Laid-Open Patent Publication No. 2014-41469

### SUMMARY OF THE INVENTION

### PROBLEMS THAT ARE TO BE SOLVED BY THE INVENTION

As shown in Fig. 7, when the rotation direction of the steering wheel is switched, the helical torsion spring 51 is moved. This changes the position where the helical torsion spring 51 comes into contact with the guide rod 52. For example, when the steering wheel is rotated in the counterclockwise direction, the helical torsion spring 51 comes into contact with the guide rod 52 at position L located at the left side in Fig. 7. When the rotation direction of the steering wheel is switched to the clockwise direction, the contact at position L is cancelled and the helical torsion spring 51 then comes into contact with the guide rod 52 at position R located at the right side in Fig. 7. Thus, when the rotation direction is switched, the contact state of the helical torsion spring 51 and the guide rod 52 changes from ON (contact at position L) to OFF (cancellation of contact at position L) and again changes to ON (contact at position R). This moves the helical torsion spring 51 for a relatively great amount. Thus, there is a tendency of noise being generated when the helical torsion spring 51 comes into contact with the guide rod 52 at position R.

It is an object of the present invention to provide a rotational operation device that limits the generation of noise.

### MEANS FOR SOLVING THE PROBLEM

A rotational operation device according to one aspect of the present invention includes a rotation shaft that rotates when an operation member is operated, a holder fixed to the rotation shaft, a helical torsion spring fitted onto the rotation shaft and tightened when pushed by the holder in a rotation direction of the rotation shaft, and two collars fitted into the helical torsion spring. Each of the two collars includes a taper with a first end surface having a first outer diameter that is less than a tightened state inner diameter of the helical torsion spring and a second end surface having a second outer diameter that is greater than an initial inner diameter of the helical torsion spring. The two collars are arranged with the first end surface of one of the two collars facing the first end surface of the other one of the two collars and with the two collars biased toward each other.

In this structure, during the process in which the helical torsion spring tightens, the helical torsion spring pushes the two collars away from each other against the biasing force that moves the two collars toward each other. Here, the inner diameter of the helical torsion spring corresponds to any outer diameter of the taper from the first diameter to the second diameter. This allows each collar to always remain in contact with the helical torsion spring following the change in the inner diameter of the helical torsion spring. This limits the generation of noise.

### EFFECT OF THE INVENTION

The present invention limits the generation of noise.

### BRIEF DESCRIPTION OF THE DRAWINGS

Fig. 1 is an exploded perspective view showing a steering device.
Fig. 2A is a cross-sectional view showing a holder piece when a steering shaft is located at a reference position.
Fig. 2B is a cross-sectional view showing the holder piece when the steering shaft rotates in the counterclockwise direction from the reference position.
Fig. 2C is a cross-sectional view showing a semi-tubular step when the steering shaft is located at the reference position.
Fig. 3 is a perspective view showing a torsion spring.
Fig. 4 is a perspective view showing a collar.
Fig. 5 is a front view showing the coupling of the collars.
Fig. 6 is a schematic view showing a still state in the prior art.
Fig. 7 is a schematic view showing moved states in the prior art.

### EMBODIMENTS OF THE INVENTION

One embodiment of a rotational operation device will now be described.

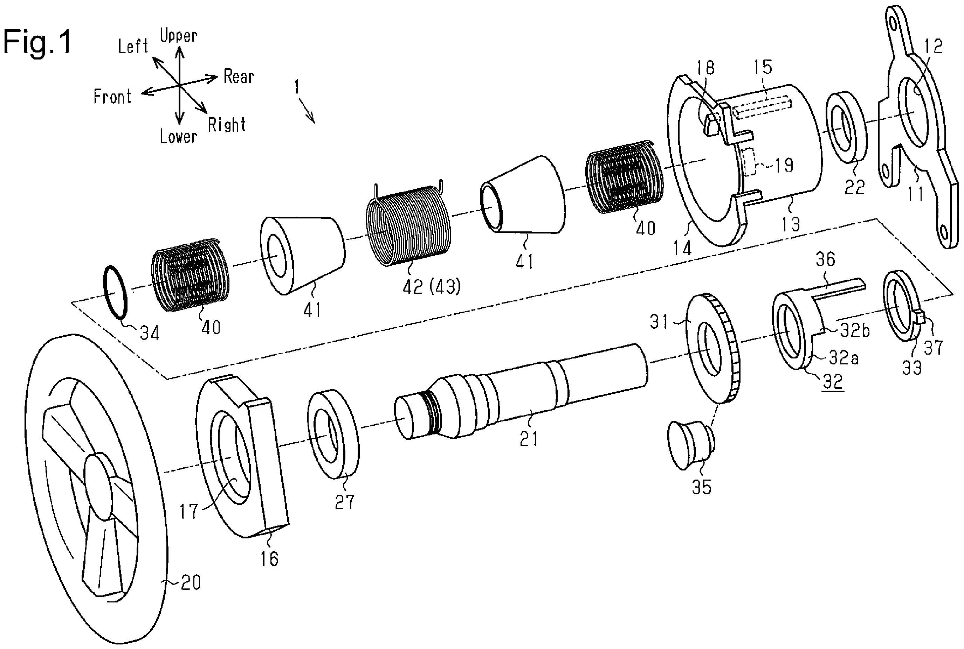

As shown in Fig. 1, a steering device 1, which is one example of a rotational operation device, includes a plate 11 fixed to a vehicle body (not shown). A plate hole 12 extends through the plate 11. The plate 11 includes a front surface to which a tubular case 13 is fixed. The axial direction of the tubular case 13 extends in the front-to-rear direction and corresponds to the axial direction of the plate hole 12. The tubular case 13 includes a front end having a flange 14 that gradually increases in diameter toward the front. The tubular case 13 includes an inner surface from which a spring stopper 15 projects. The spring stopper 15 extends in parallel to the axial direction of the tubular case 13. Further, the inner surface of the tubular case 13 includes first and second rotation restriction projections 18 and 19. When the tubular case 13 is viewed from the front in the axial direction, the spring stopper 15 is located at the twelve o'clock position, the first rotation restriction projection 18 is located at the ten o'clock position, and the second rotation restriction projection 19 is located at the two o'clock position. For example, the first rotation restriction projection 18 is located at the position rotated by 100° in the clockwise direction from the six o'clock position, and the second rotation restriction projection 19 is located at the position rotated by 100° in the counterclockwise direction from the six o'clock position.

A cover 16 is fixed to the flange 14. A cover hole 17 extends through the cover 16 in the axial direction of the tubular case 13. A cylindrical steering shaft 21 extends through the plate hole 12 of the plate 11, the tubular case 13, and the cover hole 17 of the cover 16. The steering shaft 21 is rotationally supported by the plate 11 with a plate bearing 22 and by the cover 16 with a cover bearing 27. The steering shaft 21 includes a front end to which a steering wheel 20 is coupled. The steering wheel 20 is rotated by a user. The steering wheel 20 corresponds to an operation member, and the steering shaft 21 corresponds to a rotation shaft.

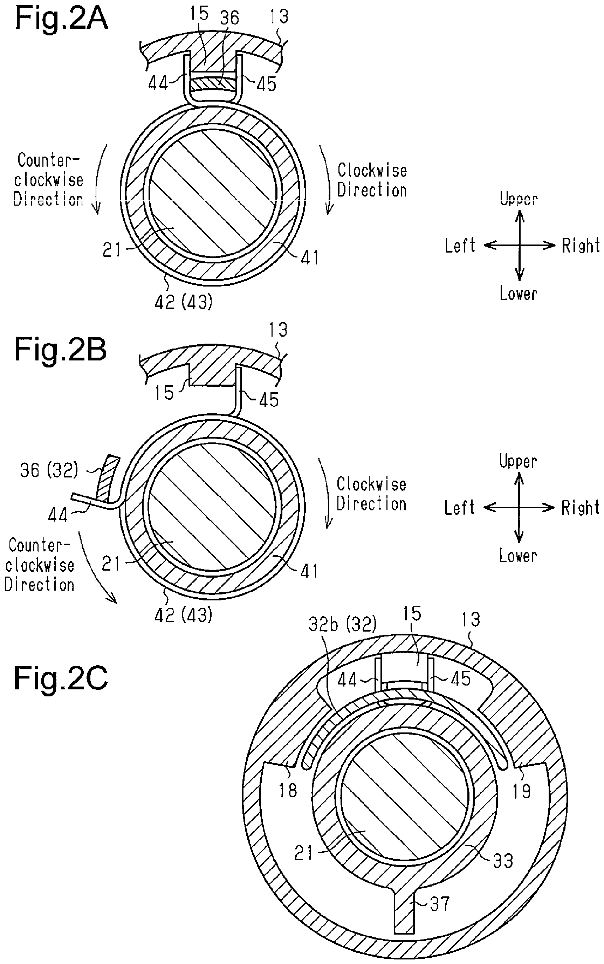

A gear 31, a holder 32, a rotation stopper 33, and a snap ring 34, sequentially from the ones closer to the cover 16, are fitted onto the portion of the steering shaft 21 between the cover bearing 27 and the plate bearing 22. The gear 31 is meshed with a rotary damper 35 that is rotationally supported by the flange 14 of the tubular case 13. The rotary damper 35 reduces the rotation speed of the gear 31 and consequently reduces the rotation speed of the steering shaft 21. The holder 32 includes a tubular holder body 32a and a semi-tubular step 32b that is continuous with the surface of the holder body 32a at the side closer to the plate 11. The holder body 32a is fitted to the steering shaft 21. That is, the holder 32 rotates integrally with the steering shaft 21. The surface of the semi-tubular step 32b at the side closer to the plate 11 includes a holder piece 36 extending in parallel to the axial direction of the tubular case 13. As shown in Fig. 2A, the holder piece 36 is located between the spring stopper 15 and the steering shaft 21 in the vertical direction (i.e., radial direction). The length of the holder piece 36 in the sideward direction is equal to the length of the spring stopper 15 in the sideward direction. The position where the middle portion of the holder piece 36 in the sideward direction vertically overlaps the middle portion of the spring stopper 15 in the sideward direction is defined as the reference position of the steering shaft 21.

As shown in Fig. 1, the rotation stopper 33 is tubular and rotatable about the steering shaft 21. As shown in Fig. 2C, the rotation stopper 33 includes an outer circumferential surface from which a restriction projection 37 extends. The rotation stopper 33 is arranged so that the first and second rotation restriction projections 18 and 19 are located in a rotation path of the restriction projection 37 when the rotation stopper 33 rotates. Further, the restriction projection 37 is located in a rotation path of the semi-tubular step 32b. The restriction projection 37 is located at the counterclockwise side of the first rotation restriction projection 18 and the clockwise side of the second rotation restriction projection 19. When the rotation of the steering shaft 21 rotates the holder 32, the semi-tubular step 32b abuts against the restriction projection 37. When the rotation of the steering shaft 21 further rotates the holder 32, the semi-tubular step 32b pushes the restriction projection 37 and rotates the rotation stopper 33. This allows the steering shaft 21 to rotate to the position where the restriction projection 37, which is pushed by the holder 32, abuts against the first or second rotation restriction projection 18 or 19. The gear 31, the holder 32, and the rotation stopper 33 are in contact with one another in the axial direction. The snap ring 34 restricts displacement of the gear 31, the holder 32, and the rotation stopper 33 relative to the steering shaft 21 in the axial direction.

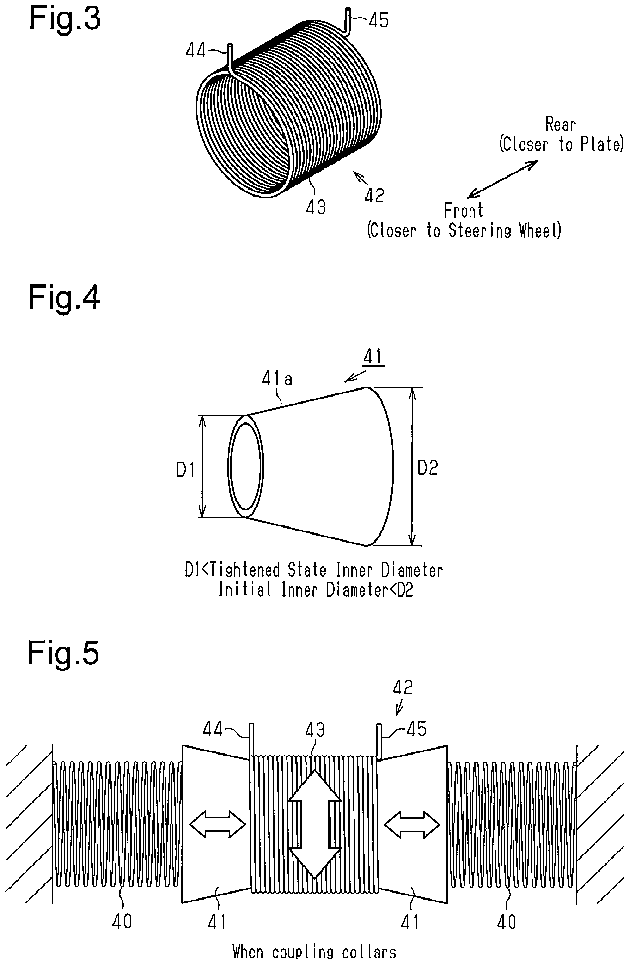

Two collars 41 are fitted onto a portion of the steering shaft 21 between the snap ring 34 and the plate bearing 22. Each of the two collars 41 are biased by a corresponding coil spring 40 toward each other in the axial direction of the steering shaft 21. Further, a torsion spring 42 is evenly fitted onto the two collars 41 (Fig. 5). The torsion spring 42 is formed by spirally winding a metal wire (hereinafter referred to as winding wire). The torsion spring 42 corresponds to a helical torsion spring. Since each collar 41 is located between the steering shaft 21 and the torsion spring 42, the steering shaft 21 and the torsion spring 42 are not in contact with each other.

As shown in Fig. 3, the torsion spring 42 includes a coil 43 and first and second ends 44 and 45 that are the two opposite ends of the winding wire of the coil 43. In a coupled state, the first end 44 is located closer to the steering wheel 20, and the second end 45 is located closer to the plate 11. The first and second ends 44 and 45 are bent upwardly. As shown in Fig. 2A, the first end 44 is located at the counterclockwise side of the holder piece 36 and the spring stopper 15. Further, the first end 44 abuts against the left surfaces of the holder piece 36 and the spring stopper 15. The second end 45 is located at the clockwise side of the holder piece 36 and the spring stopper 15. Further, the second end 45 abuts against the right surfaces of the holder piece 36 and the spring stopper 15.

As shown in Figs. 1 and 5, the two collars 41 have the same shape. Each collar 41 includes a taper 41 a having an outer diameter that changes from the first outer diameter D1 to the second outer diameter D2. That is, each collar 41 includes a first end surface having the first outer diameter D1 and a second end surface having the second outer diameter D2. The first outer diameter D1 is less than the tightened state inner diameter of the coil 43. The second outer diameter D2 is greater than the initial inner diameter of the coil 43. The initial inner diameter of the coil 43 is the inner diameter of the coil 43 when the steering shaft 21 is located at the reference position. The tightened state inner diameter of the coil 43 is the inner diameter of the coil 43 when the steering shaft 21 rotates to the position where the restriction projection 37 abuts against the first or second rotation restriction projection 18 or 19. The entire coil 43 entirely has the same inner diameter in the axial direction.

As shown in Fig. 5, the two collars 41 are arranged with the first end surface of one of the collars 41 facing the first end surface of the other collar 41 and with the two collars 41 biased toward each other. In the present example, the collars 41 are biased toward each other by the corresponding coil springs 40 with the same biasing force. Each collar 41, which is biased by the corresponding coil spring 40, elastically contacts the torsion spring 42 at a position where the outer diameter of the collar 41 coincides with the inner diameter of the torsion spring 42. Thus, the portion of each collar 41 having an outer diameter that is less than the inner diameter of the coil 43 is located at the inner side of the coil 43, and the portion of each collar 41 having an outer diameter that is greater than the inner diameter of the coil 43 is located at the outer side of the coil 43. Each collar 41 is movable back and forth in the axial direction relative to the torsion spring 42 in accordance with the balance of the biasing force of the corresponding coil spring 40 and the elastic force of the torsion spring 42 (inner diameter changes of coil 43).

The operation of the steering device 1 will now be described. A case in which the steering shaft 21 is rotated from the reference position in the counterclockwise direction when the steering wheel 20 is operated will now be described.

Referring to Fig. 2B, when the steering shaft 21 is rotated in the counterclockwise direction, the holder 32 rotates integrally with the steering shaft 21 in the counterclockwise direction. That is, the holder piece 36 rotates in the counterclockwise direction. This causes the left surface of the holder piece 36 to abut against the first end 44. Thus, the first end 44 pushes and moves the holder piece 36 in the counterclockwise direction. The torsion spring 42 accumulates elastic force as the holder piece 36 rotates in the counterclockwise direction. That is, the torsion spring 42 rotates in the counterclockwise direction. This tightens the coil 43. The tightening of the coil 43 produces operational reaction force, and the operational reaction force is perceived by the user.

Referring to Fig. 5, during the process in which the coil 43 tightens, the coil 43 pushes the two collars 41 away from each other against the biasing force that moves the two collars 41 toward each other. Here, the inner diameter of the coil 43 corresponds to any outer diameter of the taper 41a from the first diameter D1 to the second diameter D2. This allows each collar 41 to always remain in contact with the coil 43 following the change in the inner diameter of the coil 43. Further, each collar 41 always remains in contact with the coil 43 when the steering shaft 21 is rotated in the clockwise direction and when the rotation direction is switched.

As described above, the present embodiment has the following advantages.
(1) Each collar 41 always remains in contact with the coil 43 following the change in the inner diameter of the coil 43. This limits the generation of noise.
(2) In the torsion spring 42, the entire coil 43 entirely has the same inner diameter in the axial direction. This allows for stable tightening of the coil 43 using the two collars 41 as a core while evenly fitting the two collars 41, which have the same shape, into the torsion spring 42.
(3) Since the two collars 41 have the same shape, the same components can be used. Further, the same components can be used for the coil springs 40 that bias the corresponding collars 41.
(4) The two collars 41 are biased toward each other with the same biasing force. This allows for symmetrical movement of the collars 41 in the axial direction in accordance with the balance of the biasing force and the elastic force of the torsion spring 42.
(5) The outer diameter of the taper 41a of each collar 41 changes linearly (i.e., at constant rate) from the first outer diameter D1 to the second outer diameter D2. This allows each collar 41 to move properly in accordance with changes in the inner diameter of the coil 43.

The above embodiment may be modified as follows.

As shown in Figs. 1 and 4, each collar 41 is tubular. However, each collar 41 does not have to be tubular.

The first outer diameter D1 of each collar 41 may be changed to an outer diameter that is less than the tightened state inner diameter of the coil 43. For example, the first outer diameter D1 may be approximately 0.9 times the tightened state inner diameter of the coil 43. In addition, the first outer diameter D1 of the two collars 41 does not necessarily have to be the same.

The second outer diameter D2 of each collar 41 may be changed to an outer diameter that is greater than the initial inner diameter of the coil 43. For example, the second outer diameter D2 may be approximately 1.1 times the initial inner diameter of the coil 43. In addition, the second outer diameter D2 of the two collars 41 does not necessarily have to be the same.

The outer diameter of the taper 41a of each collar 41 may change in a curved manner (i.e., at different rates) from the first outer diameter D1 to the second outer diameter D2.

It is desirable that the outer diameter of the taper 41a of each collar 41 gradually increase to reach the second outer diameter D2.

The two collars 41, which are fitted into the torsion spring 42, do not necessarily need to have the same shape. In addition, regardless of whether or not each collar 41 has the same shape, the corresponding coil spring 40 does not necessarily have to be the same.

The coil 43 does not need to have the same inner diameter in the axial direction. For example, when the inner diameter of one of two insertion holes of the coil 43 into which one of the two collars 41 is inserted is the first inner diameter and when the inner diameter of the other insertion hole of the coil 43 into which the other collar 41 is inserted is the second inner diameter, the first and second outer diameters of one of the collars 41 only need to be set in accordance with the first inner diameter of the coil 43 and the first and second outer diameters of the other collar 41 only need to be set in accordance with the second inner diameter of the coil 43.

The present invention is not limited to the steering device 1 (i.e., device dedicated for vehicle). For example, the rotational operation device of the present invention may be applied to a rotary switch or the like. In this case, the tightening of the helical torsion spring produces operational reaction force when a knob (operation member) is rotated to adjust, for example, the light, temperature, or volume. The switching of the operation direction limits the generation of noise.

## Claims

1. A rotational operation device comprising:
a rotation shaft configured to rotate when an operation member is operated;
a holder fixed to the rotation shaft;
a helical torsion spring fitted onto the rotation shaft, wherein the helical torsion spring is configured to be tightened when pushed by the holder in a rotation direction of the rotation shaft; and
two collars fitted into the helical torsion spring, wherein
each of the two collars includes a taper with a first end surface having a first outer diameter that is less than a tightened state inner diameter of the helical torsion spring and a second end surface having a second outer diameter that is greater than an initial inner diameter of the helical torsion spring, and
the two collars are arranged with the first end surface of one of the two collars facing the first end surface of the other one of the two collars and with the two collars biased toward each other.

2. The rotational operation device according to claim 1, wherein the helical torsion spring entirely has the same inner diameter in an axial direction.

3. The rotational operation device according to claim 1 or 2, wherein the two collars have the same shape.

4. The rotational operation device according to any one of claims 1 to 3, wherein the two collars are biased toward each other with the same biasing force.

5. The rotational operation device according to any one of claims 1 to 4, wherein the taper has an outer diameter that changes linearly from the first outer diameter to the second outer diameter.
